# EUROPEAN PATENT SPECIFICATION

(11) **EP 3 456 787 B1**
(45) Date of publication and mention of the grant of the patent: **23.06.2021**
(21) Application number: 17191207.4
(22) Date of filing: 14.09.2017
(51) Int. Cl.: C09D 5/00

(54) **WATER-BORNE COATING FORMULATION**
WASSERBASIERENDE BESCHICHTUNGSFORMULIERUNG
FORMULATION DE REVÊTEMENT AQUEUSE

(43) Date of publication of application: 20.03.2019
(73) Proprietor: DAW SE, 64372 Ober-Ramstadt (DE)
(72) Inventor: MAGNUSSON, Malin, 41282 Göteborg (SE); OLSSON, Yvonne, 51996 Fotskäl (SE)
(74) Representative: Metten, Karl-Heinz

(56) References cited:
- EP-A1- 2 905 316
- EP-A1- 3 192 841

## Description

The present invention pertains to a water-borne dispersion coating formulation, and to a method for the preparation of a water-borne dispersion coating formulation. Further, the invention pertains to its use for coating interior walls and ceilings.

Driven both by consumer demand and by official regulations ecological aspects such as reducing the volatile organic content and eliminating allergenic compounds have become increasingly important in the manufacture of paints. This holds in particular true for interior paints where exposure to paint derived substances is most difficult to prevent.

There exist long-standing efforts to, for example, reduce the amount of conventional paint preservatives such as 5-chloro-2-methyl-2H-isothiazol-3-one (CIT) and 2-methyl-2H-isothiazol-3-one (MIT). For example, in WO 2017/144694 A1 it is proposed to obtain a preservative-free dispersion paint which is stable upon storage which apart from 1 to 50 weight percent pigments, 30 to 60 weight percent fillers, 1 to 25 weight percent dispersion polymers and 25 to 70 weight percent water also has to contain 0,1 to 3,5 weight percent alkali metal alkylsiliconates. Furthermore, the pH value of the dispersion paint has to be held in the range of 10 to 12.

Such preservative-free compositions of the state-of-the-art still only have a limited storage time. According to WO 2017/144694 A1 the dispersion paints disclosed therein shall not exhibit any discoloration, however only over period of several weeks. The same should apply with respect to the pH of these dispersion paints which shall be kept stable only over a period of several weeks. But customers, particular commercial customers such as retailers, usually require a paint product to be stable for at least six months.

EP 3 192 841 A1 discloses a powder coating for a metal substrate and food or beverage packaging having a thermoset resin, a thermoplastic resin and a crosslinker.

EP 2 905 316 A1 discloses a dispersion paint with two components of different color that may be used for decorative techniques on papers for children in schools or artwork clubs.

Accordingly, there has been a need for dispersion paints being stable both with respect to contamination as well as with respect to pH value over longer periods of time. Therefore, the object underlying the present invention has been to provide a dispersion paint which
does not exhibit the drawbacks of prior art dispersion paints as outlined above and which in particular provides sufficient storage stability, in particular over a period of several months.

These problems have been solved by a water-borne dispersion coating formulation, having a pH in the range of 10,0 to 12,5 and comprising a) at least one polymeric organic binder based on an aqueous polymer dispersion, b) at least one rheology modifier, in particular thickener, c) at least one dispersing agent, d) at least one pigment and/or filler, and e) at least one alkali hydroxide, and obtained by providing said aqueous polymer dispersion a) containing the polymeric organic binder wherein the residual (co)monomer content in said aqueous polymer dispersion a) for each (co)monomer forming said at least one polymeric organic binder is below 0,01 wt.-%, wherein said aqueous polymer dispersion a) containing the polymeric organic binder is essentially free of any organic in-can preservatives, in particular essentially free of any in-can preservatives, and more preferably essentially free of any preservatives, and wherein optionally the residual (co)monomer content for each (co)monomer in said coating formulation is below 0,01 wt.-%, and wherein said coating formulation is essentially free of any organic in-can preservatives. The water-borne dispersion coating formulations of the present invention can further comprise at least one wetting agent. The pH value of the water-borne dispersion coating formulation is regularly adjusted by the at least one base e). Conventional in-can preservatives which can be avoided with the water-borne dispersion coating formulations of the present invention include for example chloromethyl isothiazolinone, methylisothiazolinone, benzoisothiazolinone, octylisothiazolinone and methyltrimethylenisothiazolinone. In this regard, care has to be taken that said aqueous polymer dispersion a) containing the polymeric organic binder and which is used in the preparation of the water-borne dispersion coating formulation has a residual (co)monomer content for each (co)monomer forming said at least one polymeric organic binder which is below 0,01 wt.-% at the time of preparing the water-borne dispersion coating formulation. The aforementioned limit of 0,01 wt.-% for the residual (co)monomer content for each (co)monomer forming the polymeric organic binder is calculated based on the total weight of the underlying aqueous polymer dispersion. According to a further embodiment said aqueous polymer dispersion has a residual (co)monomer content for each (co)monomer forming the polymeric organic binder below 0,005 wt.-% calculated on the solid content of said aqueous polymer dispersion.

In a preferred embodiment the residual (co)monomer content in said aqueous polymer dispersion a) containing the polymeric organic binder for each (co)monomer forming said at least one polymeric organic binder is below 0,005 wt.-%, in particular below 0,003 wt.-%, and more in particular below 0,001 wt-%. The aforementioned limits for the residual (co)monomer content for each (co)monomer forming the polymeric organic binder are calculated based on the total weight of the underlying aqueous polymer dispersion. According to a further embodiment it has been found to be advantageous to use aqueous polymer dispersions a) in which the residual (co)monomer content for each (co)monomer forming the polymeric organic binder is below 0,0025 wt.-% and in particular below 0,0005 wt.-% calculated on the solid content of said aqueous polymer dispersions.

It has also been found that those water-borne dispersion coating formulations of the present invention are furnishing rather favorable results in terms of storage stability and simultaneously the absence of in-can preservatives, in particular essentially free of any preservatives, which exhibit a residual (co)monomer content for each (co)monomer in said coating formulation of below 0,005 wt.-%, in particular below 0,003 wt.-%, and more in particular of below 0,001 wt.-%. In some suitable embodiments the total residual (co)monomer content in said aqueous polymer dispersion a) containing the polymeric organic binder is below 0,0075 wt.-%, in particular below 0,005 wt.-%, and more preferred below 0.003 wt.-%. The aforementioned limits for the total residual (co)monomer content of the (co)monomers forming the polymeric organic binder are calculated based on the total weight of the underlying aqueous polymer dispersion. According to a further embodiment it has been found to be advantageous to use aqueous polymer dispersions a) in which the total residual (co)monomer content of the (co)monomers forming the polymeric organic binder is below 0,00375 wt.-%, in particular below 0,0025 wt.-%, and more in particular below 0,0015 wt.-%, calculated on the solid content of said aqueous polymer dispersions.

With the present invention is has advantageously been found that a sufficient storage stability of for example more than six months can also be guaranteed if the residual (co)monomer content of the water-borne dispersion coating formulation of the present invention is below the aforementioned limits.

Here, those embodiments of the water-borne dispersion coating formulation of the present invention are particularly preferred which are essentially free of any residual (co)monomers. In this regard it has also been found to be advantageous to make use of such aqueous polymer dispersions a) containing the polymeric organic binder which are essentially free of any residual (co)monomers. A formulation or dispersion is essentially free of any residual (co)monomer if its (co)monomer content lies below the respective detection limit using conventional analytic tools. Without being bound by theory in the meaning of the present invention it is believed that the detection limit in order for a formulation or dispersion to be essentially free of any residual (co)monomers is relating to amounts per (co)monomer species being below 0,001 wt.-%, i.e. below 10 ppm.

It, thus, has been found to be possible with the present invention to rely on water-borne dispersion coating formulations which are essentially free of any organic in-can preservatives, and in particular essentially free of any in-can preservatives, and even more preferably essentially free of any preservatives In an even more preferred embodiment it is provided that said aqueous polymer dispersion a) containing the polymeric organic binder is essentially free of any organic preservatives, and in particular essentially free of any preservatives, prior to becoming part of said water-borne dispersion coating formulation and/or wherein said coating formulation is essentially free of any organic preservatives. The water-borne dispersion coating formulation and the aqueous polymer dispersion a) can be considered to be essentially free of inorganic preservatives such as zinc sulfide or zinc oxide or zinc pyrithione if these compounds are not present or are present in an amount that small that no preservative effect can be detected. And, the water-borne dispersion coating formulation and the aqueous polymer dispersion a) can be considered to be essentially free of any organic preservatives in the meaning of the present invention if in accordance with the "Vergabegrundlage für Umweltzeichen" of RAL gGmbH relating to "Emissionsarme Innenwandfarben RAL-UZ 102" (Edition January 2015) no preservatives at all are contained therein or only, based on the individual substance, an amount of less than 2 ppm (including formaldehyde) and with respect to 5-chloro-2-methyl-4-isothiazoline (CIT) in the amount of less than 0,5 ppm. And, according to another embodiment the water-borne dispersion coating formulations and/or the aqueous polymer dispersions a) are essentially free of preservatives in case these formulations and dispersions, resp., do not contain substances mentioned on the list according to Article 95 of the Biocidal Products Regulation (prepared as of August 15, 2017) of the European Chemicals Agency (ECHA), such as Bronopol, Chlorocresol, formic acid, peracetic acid, biphenyl-2-ol, glutraral, 2-phenoxyethanol, DTBMA, BIT, CTAC, HHT, TMAD, MBM, DMDMH, DDAC, EDHO, DBNPA, zinc pyrithione, HPT, OIT, DBDCB, IPBC, THPS, DDAC, BBIT, CTAC and MBIT.

Interestingly, with the water-borne dispersion coating formulations of the present invention it is not necessary to include any water glass. Thus, high pH levels as well as lack of discoloration can be maintained without the addition of water glass. The aqueous polymer dispersion a) containing the polymeric organic binder preferably is also essentially free of any water glass.

Moreover, those water-borne dispersion coating formulations of the present invention are also preferred which have been obtained by addition of the aqueous polymer dispersion a) containing the polymeric organic binder which is essentially free of ammonia or which does not contain any ammonia.

Similarly, with the water-borne dispersion coating formulations according to the present invention it is also no longer necessary to employ any silica sol with said formulations and/or with said aqueous polymer dispersion a) to exclude or reduce the amount of any preservatives and/or to maintain a high pH level.

It has also surprisingly been found that even with those water-borne dispersion coating formulations and/or aqueous polymer dispersions a) containing the polymeric organic binder which are essentially free of any buffer, in particular free of ethylenediamine tetraacetic acid, long-lasting high pH levels can be maintained. More preferable, both the aqueous polymer dispersions a) containing the polymeric organic binder and the water-borne dispersion coating formulations containing said aqueous polymer dispersions a) are free of any buffer. It has surprisingly been found that by not using a buffer stable formulations are accessible being stable over longer storage times, e.g. longer than six months.

The water-borne dispersion coating formulations according to the present invention and/or aqueous polymer dispersions a) containing the polymeric organic binder are preferably also essentially free of any alkyl siliconates and in particular free of methyl siliconate such as potassium methyl siliconate. Surprisingly, even without such alkyl siliconates being present the water-borne dispersion coating formulations of the present invention have in particular been found to be stable for long storage times of for example six-month and more. Also with these coating formulations high pH levels can be maintained and no significant decomposition or formation of mould is observed.

The organic binder is usually added to the aqueous formulation forming the waterborne dispersion coating formulation in the form of an aqueous polymer dispersion. With the water-borne dispersion coating formulations of the present invention the at least one polymeric organic binder on which the aqueous polymer dispersion is based is preferably selected from the group consisting of vinylacetate copolymers, in particular vinylacetate/ethylene copolymers, hybrid binder, in particular organo-silicate hybrid binder, vinylaromatic copolymers, in particular styrene/acrylate copolymers, pure acrylic copolymers, and mixtures thereof. With the present invention vinylaromatic copolymers such as styrene/acrylate copolymers are particularly preferred. In case these vinylaromatic copolymers and in particular styrene/acrylate copolymers are used with the water-borne dispersion coating formulations the vinylaromatic comonomer content, in particular the styrene comonomer content, in the aqueous polymer dispersions a) to be used for the preparation of the coating formulations of the present invention preferablyis below 30 ppm, in particular below 20 ppm.

Pure acrylic binders in general rely on acrylates, methacrylates, acrylic acid and methacrylic acid as the only comonomers, e.g. no styrene or any other non-acrylic comonomer being present.

Hybrid binders according to the present invention also include so-called organo-silicate hybrid dispersion systems. These organo-silicate hybrid binder systems usually are reaction products formed from A) an organic binder selected from the group of the organic binders as specified above, in particular vinylacetate copolymers, vinylaromatic copolymers, and pure acrylic copolymers, and a) wherein at least one monomer having at least one hydrolysable silane as functional group and/or b) wherein at least one monomer having a hydroxy group as functional group is polymerized into said polymer or copolymer, and wherein said functional group does not contribute to the chain elongation reaction of the polymerization forming said polymer or copolymer, and B) silica sol and/or water glass, in particular water glass. Without being bound by theory it is presently assumed that the hydrolysable silane group a) and/or the hydroxy group b) enter into a condensation reaction with the functional groups of the silica sol and/or the water glass. A water-borne dispersion coating formulation according to the invention which contains any of the aforementioned hybrid binders which include covalently bound silica sol and/or water glass species is still considered to be essentially free of silica sol and/or water glass, resp., as long as essentially no separate silica sol and/or separate water glass has been added or can be detected.

Those aqueous organic binder dispersions of the water-borne dispersion coating formulations of the present invention are particularly advantageous which in addition are free of monomers of the acrylonitrile- and/or acrylamide-type.

Furthermore, the total amount of volatile organic compounds (VOC) of the aqueous organic binder dispersions of the water-borne dispersion coating formulations of the present invention preferably is below 300 ppm and more preferably below 200 ppm.

Among suitable rheology modifiers organic rheology modifiers are preferred. Such organic rheology modifiers can be selected from the group consisting of hydrophobically modified ethylene oxide urethane (HEUR) rheology modifiers, urea modified polyurethanes, amide ester-based rheology modifiers, amide ether-based rheology modifiers, cellulose-based rheology modifiers and mixtures thereof.

Among suitable thickeners cellulose ethers, guar, polycarboxylates, polysaccharides and polyurethane thickeners, for example hydrophobically modified urethanes, are preferred.

Filler materials can for example be selected from the group consisting of silicate fillers, calcined fillers, sulfate fillers, mineral fillers, synthetic fillers, carbonate fillers and mixtures thereof.

Suitable silicate fillers comprise among others ring silicates, chain silicates, sheet silicates, framework silicates and/or technical silicates. Aluminum silicates are particularly preferred. Particularly useful candidates among the silicate fillers comprise feldspar, quartzite, vulcanite, and siliceous earth such as diatomaceous earth. Of course, any mixtures of the above-mentioned silicate types can be used.

Anhydrous kaolin has been found to represent her rather suitable calcined filler material.

Suitable mineral fillers include alkaline earth metal oxides. And, carbonate fillers such as calcium carbonate, dolomite and/or aragonite are also preferred with the water-borne dispersion coating composition of the present invention.

In general, suitable pigments include for example titanium dioxide, iron oxide, zinc oxide, chromium oxide, cobalt oxides, mixed oxides of cobalt and aluminum, for example, cobalt blue, phthalocyanine pigments, spinel pigments, for example, spinels of cobalt with nickel and zinc, as well as spinels based on iron and chromium with copper, zinc and manganese, nickel and chromium titanate, manganese titan rutile, rutile mixed phases, bismuth vanadate, ultramarine blue and sulfides of the rare earths. As particularly suitable inorganic pigment titanium dioxide is used.

Pigments which can be employed with the water-borne dispersion coating formulations of the present invention can be categorized as follows. Suitable pigments include inorganic pigments such as colored, black and white pigments as well as gloss pigments and also organic pigments such as organic colored and black pigments. Exemplary, titanium dioxide, zinc sulfide, lithopone and/or ittringit can be used as inorganic white pigments. Suitable inorganic black pigments include iron oxide black, iron manganese black, spinel black and soot.

As suitable inorganic colored pigments use can for example be made of chrome oxide, viridian, chrome green, cobalt green, ultramarine green, cobalt blue, ultramarine blue, manganese blue, ultramarine violet, cobalt violet, manganese violet, iron oxide red, cerium sulphide, molybdenum red, ultramarine red, iron oxide brown, spinel phases, corundum, chromium titanium yellow, chromium orange, iron oxide yellow, nickel titanium yellow, chromium yellow and/or bismuth vanadate.

Suitable organic pigments comprise monoazo pigments, diazo pigments, diazo condensation pigments, anthrachinone pigments, anthrapyrimidine pigments, chinacridone pigments, diketopyrrolopyrrol pigments, dioxazine pigments, flavanthrone pigments, indan-throne pigments, isoindoline pigments, isoindolinone pigments, isoviolanthrone pigments, perinone pigments, perylene pigments, phtalocyanine pigments, pyranthrone pigments, pyrazolochinazolone pigments, thioindigo pigments, triarylcarbonium pigments and mixtures thereof. Among organic colored pigments use can for example be made of C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 or any mixtures of these pigments.

Preferred pigments comprise for example titanium dioxide, zinc sulphide, zinc oxide, soot, iron oxide, chromium oxide, cobalt blue, barite, nickel titanate, phthalocyanine pigment, spinel pigment, and/or chromium titanate,
With the present invention it is also possible to make use of mixtures of pigments. These mixtures can for example comprise inorganic and organic pigments or a selection of inorganic pigments alone or a selection of organic pigments alone.

Suitable wetting agents, for example, comprise nonionic surfactants from the class of alkyl polyethylene glycol ethers, fatty acid ethoxylates, alkylpolyglycosides, sorbitan ester, alkyne diolethoxylate, ethylene oxide and propylene oxide block copolymers and adducts of ethylene oxide and propylene oxide to alcohols, and alcohol ethoxylates or alkyl phenol ethoxylates.

With the water-borne dispersion coating formulation according to the invention a pH value in the range of 10,5 to 11,5, and in particular in the range of 11,0 to below 11,5, is preferably used. Here, it has also found to be advantageous that said aqueous polymer dispersion a) containing the polymeric organic binder has a pH in the range of 9,5 to 12,5 and in particular in the range of 10,0 to 11,5 or of 10,0 to below 11,5, prior to becoming part of the water-borne dispersion coating formulation of the present invention.

In order to arrive a high pH level for the water-borne dispersion coating formulations and also to maintain such high pH level use is preferably made of potassium hydroxide as the at least one alkali hydroxide present in said formulations.

And, in order to arrive at a rather economic mode of carrying out the invention it has surprisingly been found to be sufficient to employ no other base than alkali hydroxides and in particular no other base than potassium hydroxide for adjusting the pH level of the coating formulations of the present invention.

The water-borne dispersion coating formulation may also contain in some further embodiments at least one additive selected from the group consisting of water softeners, viscosity stabilizers, flame retardants, hydrophobing agents, matting agents, organically modified sheet silicates, thixotropic alkyd resins, defoamer, microspheres and mixtures thereof.

According to another preferred embodiment of the present invention a water-borne dispersion coating formulation, in particular a water-borne transparent or translucent lacquer, is provided having a pH in the range of 10,0 to 12,5, in particular in the range of 10,5 to 11,5, and more in particular in the range of 11,0 to below 11,5, and comprising a) at least one polymeric organic binder based on an aqueous polymer dispersion, b) at least one rheology modifier, in particular thickener, c) at least one dispersing agent, d) optionally at least one pigment and/or filler, and e) at least one alkali hydroxide, and obtained by providing said aqueous polymer dispersion a) containing the polymeric organic binder wherein the residual (co)monomer content in said aqueous polymer dispersion a) for each (co)monomer forming said at least one polymeric organic binder is below 0,01 wt.-%, in particular below 0,005 wt.-%, more in particular below 0,003 wt.-%., and most preferred below 0,001 wt.-%, wherein said aqueous polymer dispersion a) containing the polymeric organic binder is essentially free of any organic in-can preservatives, in particular any in-can preservatives, and more in particular essentially free of any preservatives, and wherein optionally the residual (co)monomer content for each (co)monomer in said coating formulation is below 0,01 wt.-%, and wherein said coating formulation is essentially free of any organic in-can preservatives.

In another preferred embodiment the water-borne dispersion coating formulation comprises
a) up to 45 wt.-%, preferably 0,5 to 35 wt.-% and more preferably 1,0 to 30,0 wt.-% polymeric organic binder (solid content)
b) 0.05 to 5,0 wt.-%, preferably 0.075 to 3.5 wt.-% and more preferably 0.1 to 3.0 wt.-% rheology modifier, in particular thickener,
c) 0.05 to 3.0 wt.-%, preferably 0.075 to 2.5 wt.-% and more preferably 0.1 to 2.0 wt.-% dispersing agent and/or wetting agent,
d) 2 bis 80 wt.-%, preferably 20 bis 75 wt.-% and more preferably 25 bis 70 wt.-% pigment and/or filler, and
e) 0.01 to 2.0 wt.-%, preferably 0.05 to 1.5 wt.-% and more preferably 0.1 to 1.0 wt.-% base, in particular alkali hydroxide,
wherein all components, water included, being present in said water-borne dispersion coating formulation always add up to 100 wt.-%.

In advantageous embodiments the water-borne dispersion coating formulation comprises 5 to 35 wt.-%, preferably 10.0 to 35 wt.-% and more preferably 12.5 to 30 wt.-% pigments and/or 5 to 60 wt.-%, preferably 10.0 to 45 wt.-% and more preferably 12.5 to 35 wt.-% filler.

In suitable embodiments water is present in the water-borne dispersion coating formulations in an amount in the range of 10 to 70 wt.-%, preferably from 15 to 65 wt.-%, and more preferably from 20 to 60 wt.-%.

According to another preferred embodiment the water-borne dispersion coating formulation comprises, based on the total weight of the neat components forming said formulation, i.e. without any water and solvents being present,
a) up to 45 wt.-%, preferably 0,5 to 40 wt.-% and more preferably 1,0 to 35,0 wt.-% polymeric organic binder (solid content)
b) 0.1 to 4,0 wt.-%, preferably 0.2 to 3.0 wt.-% and more preferably 0.3 to 2.5 wt.-% rheology modifier, in particular thickener,
c) 0.05 to 3.0 wt.-%, preferably 0.2 to 2.5 wt.-% and more preferably 0.3 to 2.0 wt.-% dispersing agent and/or wetting agent,
d) 5 bis 85 wt.-%, preferably 20 bis 80 wt.-% and more preferably 25 bis 70 wt.-% pigment and/or filler, and
e) 0.01 to 2.0 wt.-%, preferably 0.05 to 1.5 wt.-% and more preferably 0.1 to 1.0 wt.-% base, in particular alkali hydroxide,
wherein all neat/solid components being present in said water-borne dispersion coating formulation, solvents and water excluded, always add up to 100 wt.-%.

The water-borne dispersion coating formulations usually form or are part of a primer, a lacquer, e.g. a clear lacquer, a paint, a plaster material or an adhesive, preferably a primer or a paint. Among paints dispersion paints are particularly preferred. Moreover, the paints of the present invention are most suitable as interior paints, in particular dispersion interior paints.

The problem underlying the present invention has also been solved by a method for the preparation of a water-borne coating formulation, in particular a water-borne dispersion coating formulation according to the present invention, comprising the step of mixing an aqueous polymer dispersion A) containing at least one polymeric organic binder with an aqueous matrix material B) comprising least one pigment and/or filler and at least one base, in particular alkali hydroxide, wherein said aqueous polymer dispersion A) containing the polymeric organic binder has a residual (co)monomer content for each (co)monomer forming said polymeric organic binder below 0,01 wt.-%, calculated on the weight of the aqueous polymer dispersion, wherein the pH value of the aqueous matrix material B) is in the range of 10,0 to 12,5, in particular in the range of 10,5 to 11,5 and preferably in the range of 11,0 to below 11,5, and wherein the pH value of said aqueous polymer dispersion A) containing the polymeric organic binder is in the range of 9,5 to 12,5 and in particular in the range of 10,0 to 11,5 or of 10,0 to below 11,5.

According to a rather suitable embodiment the pH of the aqueous polymer dispersion A) containing the polymeric organic binder is below that of the aqueous matrix material B) at the time of mixing.

With the method of the present invention aqueous polymer dispersions A) containing the polymeric organic binder are preferably employed which are essentially free of any organic in-can preservatives, in particular essentially free of any organic preservatives, and more in particular essentially free of any preservatives.

In a preferred embodiment of the method according to the present invention the residual (co)monomer content in said aqueous polymer dispersions A) containing the polymeric organic binder for each (co)monomer forming said at least one polymeric organic binder is below 0,005 wt.-%, in particular below 0,003 wt.-%, and more in particular below 0,001 wt.-%, calculated on the weight of the aqueous polymer dispersions. Moreover, also with said aqueous matrix material B) such a material is preferred in which the residual (co)monomer content for each (co)monomer is below 0,005 wt.-% and in particular below 0,001 wt.-% calculated on the weight of the aqueous matrix material.

According to another preferred embodiment the method of the present invention provides for employing aqueous polymer dispersions A) containing the polymeric organic binder which are essentially free of any organic preservatives. Further, also with said aqueous matrix material B) such material is preferred which is essentially free of any organic preservatives.

The method of the present invention can also be simplified by avoiding the addition of any water glass in said aqueous polymer dispersions A) containing the polymeric organic binder and/or in said aqueous matrix material B).

According to the present invention mixing of the aqueous polymer dispersion A) with the aqueous matrix material B) usually comprises adding said aqueous polymer dispersion A) to said aqueous matrix material B).

The water-borne dispersion coating formulation according to the present invention can for example be used for coating interior walls and/or ceilings, in particular gypsum boards and/or painted surfaces. It is also possible to apply the water-borne dispersion coating formulation to wood surfaces, render/plaster coatings and concrete walls or ceilings. Although application to interior walls is preferred, the water-borne dispersion coating formulation of the present invention can also be applied to exterior walls.

Said water-borne dispersion coating formulations can for example be applied by air spraying, roller, dip coating, paint brush or airless spraying.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description, as well as the claims could be essential alone or in every combination for the realization of the invention in its different embodiments.

## Claims

1. Water-borne dispersion coating formulation,
having a pH in the range of 10,0 to 12,5 and comprising
a) at least one polymeric organic binder based on an aqueous polymer dispersion,
b) at least one rheology modifier, in particular thickener,
c) at least one dispersing agent,
d) at least one pigment and/or filler, and
e) at least one alkali hydroxide,
and obtained by providing said aqueous polymer dispersion a) containing the polymeric organic binder having a residual (co)monomer content in said aqueous polymer dispersion a) for each (co)monomer forming said at least one polymeric organic binder of below 0,01 wt.-%,
wherein said aqueous polymer dispersion a) containing the polymeric organic binder is essentially free of any organic in-can preservatives, in particular any in-can preservatives, and
wherein optionally the residual (co)monomer content for each (co)monomer in said coating formulation is below 0,01 wt.-%, and wherein
said coating formulation is essentially free of any organic in-can preservatives.

2. Water-borne coating formulation according to claim 1, wherein
the residual (co)monomer content in said aqueous polymer dispersion a) containing the polymeric organic binder for each (co)monomer forming said at least one polymeric organic binder is below 0,005 wt.-%, and in particular below 0,001 wt.-% and/or wherein the residual (co)monomer content for each (co)monomer in said coating formulation is below 0,005 wt.-% and in particular below 0,001 wt.-%.

3. Water-borne coating formulation according to claim 1 or 2, wherein
said coating formulation is essentially free of any residual (co)monomers and/or wherein said aqueous polymer dispersion a) containing the polymeric organic binder is essentially free of any residual (co)monomers.

4. Water-borne coating formulation according to any of the preceding claims, further comprising
at least one wetting agent.

5. Water-borne coating formulation according to any of the preceding claims, wherein said aqueous polymer dispersion a) containing the polymeric organic binder is essentially free of any organic preservatives prior to becoming part of said water-borne coating formulation and/or wherein said coating formulation is essentially free of any organic preservatives.

6. Water-borne coating formulation according to any of the preceding claims, wherein said coating formulation and/or said aqueous polymer dispersion a) containing the polymeric organic binder is essentially free of any water glass, and/or wherein
said coating formulation and/or said aqueous polymer dispersion a) containing the polymeric organic binder is essentially free of any silica sol and/or wherein
said coating formulation and/or said aqueous polymer dispersion a) containing the polymeric organic binder is essentially free of any buffer, in particular free of ethylenediaminetetraacetic acid, and/or wherein
said coating formulation and/or said aqueous polymer dispersion a) containing the polymeric organic binder is essentially free of any alkyl siliconates and in particular free of methyl siliconate.

7. Water-borne coating formulation according to any of the preceding claims, wherein the at least one polymeric organic binder on which the aqueous polymer dispersion is based is selected from the group consisting of vinylacetate copolymers, in particular vinylacetate/ethylene copolymers, hybrid binder, in particular organo-silicate hybrid binder, vinylaromatic copolymers, in particular styrene/acrylate copolymers, pure acrylic copolymers, and mixtures thereof.

8. Water-borne coating formulation according to any of the preceding claims, having a pH in the range of 10,5 to 11,5, in particular in the range of 11,0 to below 11,5 and/or wherein
said aqueous polymer dispersion a) containing the polymeric organic binder has a pH in the range of 9,5 to 12,5 and in particular in the range of 10,0 to 11,5 or of 10,0 to below 11,5, prior to becoming part of said water-borne coating formulation.

9. Water-borne coating formulation according to any of the preceding claims, wherein the at least one alkali hydroxide is KOH.

10. Water-borne coating formulation according to any of the preceding claims, wherein it contains apart from alkali hydroxides, in particular apart from KOH, essentially no other base for adjusting its pH value.

11. Water-borne coating formulation according to any of the preceding claims, further comprising
at least one additive selected from the group consisting of water softeners, viscosity stabilizers, flame retardants, hydrophobing agents, matting agents, organically modified sheet silicates, thixotropic alkyd resins, defoamer, microspheres or mixtures thereof.

12. Water-borne coating formulation according to any of the preceding claims, wherein it forms or is part of a primer, a lacquer or a paint, preferably a primer or a paint, in particular a dispersion paint.

13. Water-borne coating formulation according to claim 12, wherein
the paint is an interior paint, in particular a dispersion interior paint.

14. Method for the preparation of a water-borne coating formulation, in particular according to any of the preceding claims, comprising the step of
mixing an aqueous polymer dispersion A) containing at least one polymeric organic binder with an aqueous matrix material B) comprising least one pigment and/or filler and at least one base, in particular alkali hydroxide,
wherein said aqueous polymer dispersion A) containing the polymeric organic binder has a residual (co)monomer content for each (co)monomer forming said polymeric organic binder below 0,01 wt.-%,
wherein the pH value of the aqueous matrix material B) is in the range of 10,0 to 12,5, in particular in the range of 10,5 to 11,5 and preferably in the range of 11,0 to below 11,5, and
wherein the pH value of said aqueous polymer dispersion A) containing the polymeric organic binder is in the range of 9,5 to 12,5 and in particular in the range of 10,0 to 11,5 or of 10,0 to below 11,5.

15. Method according to claim 14, wherein
said aqueous polymer dispersion A) containing the polymeric organic binder is essentially free of any organic in-can preservatives, in particular essentially free of any in-can preservatives, and wherein
the residual (co)monomer content in said aqueous polymer dispersion A) containing the polymeric organic binder for each (co)monomer forming said at least one polymeric organic binder is below 0,005 wt.-%, and in particular below 0,001 wt.-% and/or wherein the residual (co)monomer content for each (co)monomer in said aqueous matrix material B) is below 0,005 wt.-% and in particular below 0,001 wt.-%.

16. Method according to claim 14 or 15, wherein
mixing of the aqueous polymer dispersion A) with the aqueous matrix material B) comprises adding said aqueous polymer dispersion A) to said aqueous matrix material B).

17. Use of the water-borne coating formulation according to any of claims 1 to 13 for coating interior walls and/or ceilings, in particular gypsum boards and/or painted surfaces.

## Patentansprüche

1. Dispersionsbeschichtungsformulierung auf Wasserbasis,
aufweisend einen pH-Wert im Bereich von 10,0 bis 12,5 und umfassend
a) mindestens ein polymeres organisches Bindemittel auf Basis einer wässrigen Polymerdispersion,
b) mindestens einen Rheologiemodifikator, insbesondere Verdickungsmittel,
c) mindestens ein Dispergiermittel,
d) mindestens ein Pigment und/oder einen Füllstoff, und
e) mindestens ein Alkalihydroxid,
und erhalten durch Bereitstellen der das polymere organische Bindemittel enthaltenden wässrigen Polymerdispersion a) mit einem Rest(co)monomergehalt in der wässrigen Polymerdispersion a) für jedes das mindestens eine polymere organische Bindemittel bildende (Co)monomer von unter 0,01 Gew.-%,
wobei die das polymere organische Bindemittel enthaltende wässrige Polymerdispersion a) im Wesentlichen frei von jeglichen organischen Topfkonservierungsmitteln, insbesondere jeglichen Topfkonservierungsmitteln, ist, und
wobei gegebenenfalls der Rest(co)monomergehalt für jedes (Co)monomer in der Beschichtungsformulierung unter 0,01 Gew.-% beträgt, und wobei die Beschichtungsformulierung im Wesentlichen frei von jeglichen organischen Topfkonservierungsmitteln ist.

2. Beschichtungsformulierung auf Wasserbasis nach Anspruch 1, wobei der Rest(co)monomergehalt in der das polymere organische Bindemittel enthaltenden wässrigen Polymerdispersion a) für jedes das mindestens eine polymere organische Bindemittel bildende (Co)monomer unter 0,005 Gew.-% und insbesondere unter 0,001 Gew.-% beträgt und/oder wobei der Rest(co)monomergehalt für jedes (Co)monomer in der Beschichtungsformulierung unter 0,005 Gew.-% und insbesondere unter 0,001 Gew.-% beträgt.

3. Beschichtungsformulierung auf Wasserbasis nach Anspruch 1 oder 2, wobei die Beschichtungsformulierung im Wesentlichen frei von jeglichen Rest(co)monomeren
ist und/oder wobei die das polymere organische Bindemittel enthaltende wässrige Polymerdispersion a) im Wesentlichen frei von jeglichen Rest(co)monomeren ist.

4. Beschichtungsformulierung auf Wasserbasis nach einem der vorangehenden Ansprüche, ferner umfassend mindestens ein Benetzungsmittel.

5. Beschichtungsformulierung auf Wasserbasis nach einem der vorangehenden Ansprüche, wobei die das polymere organische Bindemittel enthaltende wässrige Polymerdispersion a) im Wesentlichen frei von jeglichen organischen Konservierungsmitteln ist, bevor sie Teil der Beschichtungsformulierung auf Wasserbasis wird, und/oder wobei die Beschichtungsformulierung im Wesentlichen frei von jeglichen organischen Konservierungsmitteln ist.

6. Beschichtungsformulierung auf Wasserbasis nach einem der vorangehenden Ansprüche, wobei
die Beschichtungsformulierung und/oder die das polymere organische Bindemittel enthaltende wässrige Polymerdispersion a) im Wesentlichen frei von jeglichem Wasserglas ist, und/oder wobei
die Beschichtungsformulierung und/oder die das polymere organische Bindemittel enthaltende wässrige Polymerdispersion a) im Wesentlichen frei von jeglichem Kieselsäuresol ist, und/oder wobei
die Beschichtungsformulierung und/oder die das polymere organische Bindemittel enthaltende wässrige Polymerdispersion a) im Wesentlichen frei von jeglichem Puffer, insbesondere frei von Ethylendiamintetraessigsäure ist, und/oder wobei die Beschichtungsformulierung und/oder die das polymere organische Bindemittel enthaltende wässrige Polymerdispersion a) im Wesentlichen frei von jeglichen Alkylsiliconaten und insbesondere frei von Methylsiliconat ist.

7. Beschichtungsformulierung auf Wasserbasis nach einem der vorangehenden Ansprüche, wobei das mindestens eine polymere organische Bindemittel, auf dem die wässrige Polymerdispersion basiert, ausgewählt ist aus der Gruppe bestehend aus Vinylacetat-Copolymeren, insbesondere Vinylacetat/Ethylen-Copolymeren, Hybridbindemittel, insbesondere Organosilicat-Hybridbindemittel, vinylaromatischen Copolymeren, insbesondere Styrol/Acrylat-Copolymeren, reinen Acryl-Copolymeren, und Gemischen davon.

8. Beschichtungsformulierung auf Wasserbasis nach einem der vorangehenden Ansprüche, aufweisend einen pH-Wert im Bereich von 10,5 bis 11,5, insbesondere im Bereich von 11,0 bis unter 11,5, und/oder wobei
die das polymere organische Bindemittel enthaltende wässrige Polymerdispersion a) einen pH-Wert im Bereich von 9,5 bis 12,5 und insbesondere im Bereich von 10,0 bis 11,5 oder von 10,0 bis unter 11,5 aufweist, bevor sie Teil der Beschichtungsformulierung auf Wasserbasis wird.

9. Beschichtungsformulierung auf Wasserbasis nach einem der vorangehenden Ansprüche, wobei das mindestens eine Alkalihydroxid KOH ist.

10. Beschichtungsformulierung auf Wasserbasis nach einem der vorangehenden Ansprüche, wobei sie außer Alkalihydroxiden, insbesondere außer KOH, im Wesentlichen keine andere Base zur Einstellung ihres pH-Wertes enthält.

11. Beschichtungsformulierung auf Wasserbasis nach einem der vorangehenden Ansprüche, ferner umfassend mindestens ein Additiv, ausgewählt aus der Gruppe bestehend aus Wasserenthärtungsmitteln, Viskositätsstabilisatoren, Flammschutzmitteln, Hydrophobierungsmitteln, Mattierungsmitteln, organisch modifizierten Schichtsilicaten, thixotropen Alkydharzen, Antischaummittel, Mikrokügelchen oder Gemischen davon.

12. Beschichtungsformulierung auf Wasserbasis nach einem der vorangehenden Ansprüche, wobei sie eine Grundierung, einen Lack oder eine Farbe bildet oder Teil davon ist, vorzugsweise eine Grundierung oder eine Farbe, insbesondere eine Dispersionsfarbe.

13. Beschichtungsformulierung auf Wasserbasis nach Anspruch 12, wobei die Farbe eine Innenfarbe, insbesondere eine Innendispersionsfarbe ist.

14. Verfahren zur Herstellung einer Beschichtungsformulierung auf Wasserbasis, insbesondere nach einem der vorangehenden Ansprüche, umfassend den Schritt des Mischens einer wässrigen Polymerdispersion A), die mindestens ein polymeres organisches Bindemittel enthält, mit einem wässrigen Matrixmaterial B), das mindestens ein Pigment und/oder einen Füllstoff und mindestens eine Base, insbesondere Alkalihydroxid, umfasst,
wobei die das polymere organische Bindemittel enthaltende wässrige Polymerdispersion A) einen Rest(co)monomergehalt für jedes das polymere organische Bindemittel bildende (Co)monomer von unter 0,01 Gew.-% aufweist, wobei der pH-Wert des wässrigen Matrixmaterials B) im Bereich von 10,0 bis 12,5, insbesondere im Bereich von 10,5 bis 11,5 und vorzugsweise im Bereich von 11,0 bis unter 11,5 liegt, und
wobei der pH-Wert der das polymere organische Bindemittel enthaltenden wässrigen Polymerdispersion A) im Bereich von 9,5 bis 12,5 und insbesondere im Bereich von 10,0 bis 11,5 oder von 10,0 bis unter 11,5 liegt.

15. Verfahren nach Anspruch 14, wobei
die das polymere organische Bindemittel enthaltende wässrige Polymerdispersion A) im Wesentlichen frei von jeglichen organischen Topfkonservierungsmitteln, insbesondere im Wesentlichen frei von jeglichen Topfkonservierungsmitteln ist, und wobei
der Rest(co)monomergehalt in der das polymere organische Bindemittel enthaltenden wässrigen Polymerdispersion A) für jedes das mindestens eine polymere organische Bindemittel bildende (Co)monomer unter 0,005 Gew.-% und insbesondere unter 0,001 Gew.-% beträgt und/oder wobei der Rest(co)monomergehalt für jedes (Co)monomer in dem wässrigen Matrixmaterial B) unter 0,005 Gew.-% und insbesondere unter 0,001 Gew.-% beträgt.

16. Verfahren nach Anspruch 14 oder 15, wobei das Mischen der wässrigen Polymerdispersion A) mit dem wässrigen Matrixmaterial B) das Hinzugeben der wässrigen Polymerdispersion A) zu dem wässrigen Matrixmaterial B) umfasst.

17. Verwendung der Beschichtungsformulierung auf Wasserbasis nach einem der Ansprüche 1 bis 13 zur Beschichtung von Innenwänden und/oder Decken, insbesondere Gipsplatten und/oder gestrichenen Oberflächen.

## Revendications

1. Formulation de revêtement en dispersion aqueuse,
ayant un pH dans la plage de 10,0 à 12,5 et comprenant
a) au moins un liant organique polymère basé sur une dispersion polymère aqueuse,
b) au moins un modificateur de rhéologie, en particulier un épaississant,
c) au moins un agent dispersant,
d) au moins un pigment et/ou une charge, et
e) au moins un hydroxyde alcalin,
et obtenue en fournissant ladite dispersion polymère aqueuse a) contenant le liant organique polymère ayant un contenu (co)monomère résiduel dans ladite dispersion polymère aqueuse a) pour chaque (co)monomère formant ledit au moins un liant organique polymère inférieur à 0,01 % massique,
ladite dispersion polymère aqueuse a) contenant le liant organique polymère étant essentiellement dépourvue de tout agent de conservation pour le stockage en pot organique, en particulier de tout agent de conservation pour le stockage en pot, et, alternativement, le contenu (co)monomère résiduel pour chaque (co)monomère dans ladite formulation de revêtement étant inférieur à 0,01 % massique, et
ladite formulation de revêtement étant essentiellement dépourvue de tout agent de conservation pour le stockage en pot organique.

2. Formulation de revêtement aqueuse selon la revendication 1,
le contenu (co)monomère résiduel dans ladite dispersion polymère aqueuse a) contenant le liant organique polymère pour chaque (co)monomère formant ledit au moins un liant organique polymère étant inférieur à 0,005 % massique, et en particulier inférieur à 0,001 % massique, et/ou le contenu (co)monomère résiduel pour chaque (co)monomère dans ladite formulation de revêtement étant inférieur à 0,005 % massique et en particulier inférieur à 0,001 % massique.

3. Formulation de revêtement aqueuse selon la revendication 1 ou 2,
ladite formulation de revêtement étant essentiellement dépourvue de tout (co)monomère résiduel et/ou ladite dispersion polymère aqueuse a) contenant le liant organique polymère étant essentiellement dépourvue de tout (co)monomère résiduel.

4. Formulation de revêtement aqueuse selon l'une quelconque des revendications précédentes, comprenant en outre au moins un agent mouillant.

5. Formulation de revêtement aqueuse selon l'une quelconque des revendications précédentes,
ladite dispersion polymère aqueuse a) contenant le liant organique polymère étant essentiellement dépourvue de tout agent de conservation organique avant de faire partie de ladite formulation de revêtement aqueuse et/ou ladite formulation de revêtement étant essentiellement dépourvue de tout agent de conservation organique.

6. Formulation de revêtement aqueuse selon l'une quelconque des revendications précédentes, ladite formulation de revêtement et/ou dispersion polymère aqueuse a) contenant le liant organique polymère étant essentiellement dépourvue de tout silicate de sodium, et/ou ladite formulation de revêtement et/ou dispersion polymère aqueuse a) contenant le liant organique polymère étant essentiellement dépourvue de tout gel de silice et/ou ladite formulation de revêtement et/ou dispersion polymère aqueuse a) contenant le liant organique polymère étant essentiellement dépourvue de tout tampon, en particulier dépourvue d'acide éthylènediaminetétraacétique, et/ou
ladite formulation de revêtement et/ou ladite dispersion polymère aqueuse a) contenant le liant organique polymère étant essentiellement dépourvue de tout alkylsiliconate et en particulier de tout méthylsiliconate.

7. Formulation de revêtement aqueuse selon l'une quelconque des revendications précédentes,
l'au moins un liant organique polymère sur lequel la dispersion est basée étant sélectionné parmi le groupe se composant de copolymères d'acétate de vinyle, en particulier de copolymères d'éthylène-acétate de vinyle, de liants hybrides, en particulier de liant hybride organo-silicate, de copolymères vinylaromatiques, en particulier de copolymères styrène acrylate, de copolymères acryliques purs, et de mélanges de ceux-ci.

8. Formulation de revêtement aqueuse selon l'une quelconque des revendications précédentes, ayant un pH dans la plage de 10,5 à 11,5, en particulier dans la plage de 11,0 à moins de 11,5 et/ou
ladite dispersion polymère aqueuse a) contenant le liant organique polymère ayant un pH dans la plage de 9,5 à 12,5 et en particulier dans la plage de 10,0 à 11,5 ou de 10,0 à moins de 11,5 avant de faire partie de ladite formulation de revêtement aqueuse.

9. Formulation de revêtement aqueuse selon l'une quelconque des revendications précédentes, l'au moins un hydroxyde alcalin étant KOH.

10. Formulation de revêtement aqueuse selon l'une quelconque des revendications précédentes,
ne comprenant essentiellement aucune autre base pour ajuster sa valeur de pH, à l'exception des hydroxydes alcalins, en particulier à l'exception de KOH.

11. Formulation de revêtement aqueuse selon l'une quelconque des revendications précédentes, comprenant en outre
au moins un additif sélectionné parmi le groupe se composant de : adoucisseurs d'eau, stabilisateurs de viscosité, agents ignifugeants, agents hydrophobes, agents matifiants, phyllosilicates modifiés de manière organique, résines alkydes thixotropes, agents antimousses, microsphères ou mélanges de ceux-ci.

12. Formulation de revêtement aqueuse selon l'une quelconque des revendications précédentes,
formant ou faisant partie d'une couche primaire, d'une laque ou d'une peinture, de préférence d'une couche primaire ou d'une peinture, en particulier d'une peinture en dispersion.

13. Formulation de revêtement aqueuse selon la revendication 12,
la peinture étant une peinture d'intérieur, en particulier une peinture d'intérieur en dispersion.

14. Procédé pour la préparation d'une formulation de revêtement aqueuse, en particulier selon l'une quelconque des revendications précédentes, comprenant l'étape de mélanger une dispersion polymère aqueuse A) contenant au moins un liant organique polymère avec un matériau de matrice aqueux B) comprenant au moins un pigment et/ou une charge et au moins une base, en particulier un hydroxyde alcalin,
ladite dispersion polymère aqueuse A) contenant le liant organique polymère ayant un contenu (co)monomère résiduel pour chaque (co)monomère formant ledit au moins un liant organique polymère inférieur à 0,01 % massique,
la valeur de pH du matériau de matrice aqueux B) étant dans la plage de 10,0 à 12,5, en particulier dans la plage de 10,5 à 11,5 et de préférence dans la plage de 11,0 à moins de 11,5, et
la valeur de pH de ladite dispersion polymère aqueuse A) contenant le liant organique polymère étant dans la plage de 9,5 à 12,5 et en particulier dans la plage de 10,0 à 11,5 ou de 10,0 à moins de 11,5.

15. Procédé selon la revendication 14,
ladite dispersion polymère aqueuse A) contenant le liant organique polymère étant essentiellement dépourvue de tout agent de conservation pour le stockage en pot organique, en particulier de tout agent de conservation pour le stockage en pot, et le contenu (co)monomère résiduel dans ladite dispersion polymère aqueuse A) contenant le liant organique polymère pour chaque (co)monomère formant ledit au moins un liant organique polymère étant inférieur à 0,005 % massique, et en particulier inférieur à 0,001 % massique, et/ou le contenu (co)monomère résiduel pour chaque (co)monomère dans ledit matériau de matrice aqueux B) étant inférieur à 0,005 % massique et en particulier inférieur à 0,001 % massique.

16. Procédé selon la revendication 14 ou 15,
le mélange de la dispersion polymère aqueuse A) avec le matériau de matrice aqueux B) comprenant ajouter ladite dispersion polymère aqueuse A) au susdit matériau de matrice aqueux B).

17. Utilisation de la formulation de revêtement aqueuse selon l'une quelconque des revendications 1 à 13 pour enduire des parois intérieures et/ou des plafonds, en particulier des plaques de plâtre et/ou des surfaces peintes.
